# FASCICULE DE BREVET EUROPEEN

(11) **EP 3 661 775 B1**
(45) Date de publication et mention de la délivrance du brevet: **26.10.2022**
(21) Numéro de dépôt: 18758946.0
(22) Date de dépôt: 01.08.2018
(51) Int. Cl.: B60G 21/055

(54) **PALIER POUR BARRE STABILISATRICE MUNI D'UNE CONTREPLAQUE**
LAGER FÜR STABILISATOR MIT EINER TRÄGERPLATTE
BEARING FOR STABILISER BAR PROVIDED WITH A BACKING PLATE

(30) Priorité: 02.08.2017 FR 1757423
(43) Date de publication de la demande: 10.06.2020
(73) Titulaire: Sogefi Suspensions, 78280 Guyancourt (FR)
(72) Inventeur: BAUDELET, Jacques, 62490 Vitry en Artois (FR)
(74) Mandataire: Cabinet Beau de Loménie
(86) Numéro de dépôt international: PCT/FR2018/051978
(87) Numéro de publication internationale: WO 2019/025727

(56) Documents cités:
- EP-A1- 3 326 846
- WO-A1-2010/149756
- WO-A1-2017/216247
- CN-U- 203 344 686
- DE-A1-102012 208 156
- DE-A1-102014 217 839
- DE-U1-202016 100 149
- FR-A1- 2 994 129

## Description

### DOMAINE DE L'INVENTION

Le présent exposé concerne un palier pour barre stabilisatrice de véhicule.

Un tel palier peut être utilisé pour monter tout type de barre stabilisatrice sur le châssis de tout type de véhicule, afin de limiter le roulis du véhicule. En particulier, un tel palier peut être utilisé pour monter la barre stabilisatrice de n'importe quel essieu du véhicule.

### ETAT DE LA TECHNIQUE ANTERIEURE

Dans un véhicule à essieux, les deux roues d'un même essieu sont généralement reliées par une barre stabilisatrice. Une telle barre stabilisatrice, également appelée barre anti-dévers ou anti-roulis, est un élément de suspension du véhicule qui forme un ressort tendant à solidariser les deux roues d'un même essieu. Une telle barre stabilisatrice permet ainsi de limiter le roulis lors des virages et de réduire les déformations subies par la suspension de manière à maintenir le plus possible les pneus à plat sur le sol et donc à conserver une adhérence maximale.

Chaque extrémité d'une barre stabilisatrice est ainsi fixée au triangle de suspension d'une roue, par l'intermédiaire de biellettes rotulées, tandis que la partie centrale de la barre stabilisatrice est fixée au châssis du véhicule par l'intermédiaire d'au moins deux paliers.

Ces paliers doivent permettre la fixation de la barre stabilisatrice sur le châssis du véhicule tout en assurant une certaine souplesse, la barre stabilisatrice devant pouvoir légèrement bouger par rapport au châssis.

Pour cette raison, les paliers comprennent classiquement une bride métallique et une bague élastique interposée entre la barre stabilisatrice et la bride métallique. Cette bague élastique, le plus souvent en élastomère, est ainsi généralement mise en place autour de la barre stabilisatrice puis enserrée par la bride qui la bloque alors par compression.

Dans certaines configurations, le palier comprend en outre une contreplaque rapportée contre la bride métallique pour refermer cette dernière et ainsi enfermer la bague élastique et la barre stabilisatrice.

Toutefois, de telles contreplaques, généralement métalliques, rajoutent de la masse à l'ensemble stabilisateur, ce qui n'est pas souhaité par les constructeurs automobiles.

Par ailleurs, elles complexifient l'assemblage de l'ensemble stabilisateur puisqu'elles nécessitent soit de les maintenir correctement en position par rapport à la bride lors de la fixation du palier sur le châssis du véhicule, soit de les fixer sur la bride au cours d'une étape supplémentaire, de sertissage typiquement, mettant en œuvre des outils supplémentaires complexes et onéreux. Des brides en matériau plastique sont également connues des documents DE 10 2014 217 839, qui divulgue le préambule de la revendication 1, DE 20 2016 100 149 U1, ainsi que des documents EP 3 326 846 et WO 2017/216247, qui font partis de l'état de la technique selon l'article 54(3) CBE.

Il existe donc un réel besoin pour un palier pour barre stabilisatrice de véhicule qui soit dépourvu, au moins en partie, des inconvénients inhérents aux configurations connues précitées.

### PRESENTATION DE L'INVENTION

Le présent exposé concerne un palier pour barre stabilisatrice de véhicule selon la revendication 1. Un tel palier comprend une bride comportant au moins une portion de retenue et une gorge, configurée pour recevoir la barre stabilisatrice, et une contreplaque comportant au moins une portion d'obturation, la contreplaque étant prévue pour être rapportée sur la bride de manière à ce que la portion d'obturation ferme la gorge de la bride, dans lequel la bride et la contreplaque possèdent des organes d'emboitage élastique configurés pour solidariser la contreplaque sur la bride, et dans lequel la contreplaque a une forme de plaque avec des surfaces planes, sans qu'aucun élément ne fasse saillie.

Dans le présent exposé, on entend par emboitage élastique (également fréquemment appelé encliquetage ou clipsage) un mode d'assemblage de deux parties par engagement et déformation élastique (en général déformation locale d'une partie seulement d'une pièce, par exemple d'une languette, ou d'un élément périphérique de ladite pièce, ou encore par déformation de l'ensemble des pièces impliquées dans l'assemblage). Lorsque les deux parties sont enqaqées dans la position d'emboitage, les parties ont généralement repris leur forme initiale et ne présentent plus de déformation élastique (ou une déformation élastique moindre). Lorsque les deux parties sont enqaqées l'une avec l'autre dans la position d'emboitage, elles coopèrent l'une avec l'autre de manière à s'opposer aux, voire bloquer, les mouvements relatifs desdites parties dans le sens du dégagement (sens opposé au sens de l'engagement). En position d'emboitage, les deux parties peuvent en outre coopérer de manière à s'opposer à, voire bloquer, leurs mouvements relatifs dans le sens du prolongement de l'engagement, au-delà de la position d'emboitage.

Ainsi, grâce à l'utilisation d'organes d'emboitage élastique, il est possible de munir le palier d'une contreplaque au prix d'un effort supplémentaire très réduit, l'assemblage de la contreplaque sur la bride étant très rapide, très facile. En outre, selon la taille du palier et la résistance souhaitée de l'assemblage, il est possible de dimensionner ces organes d'emboitage élastique de telle sorte que l'assemblage ne nécessite aucun outil supplémentaire ou, tout au moins, aucun autre outillage qu'une simple presse.

De plus, une fois assemblé de cette manière, le palier peut être manipulé comme un tout, sans devoir maintenir certaines de ses pièces les unes avec les autres, ce qui facilite grandement sa manipulation et sa fixation sur le châssis du véhicule. La pénibilité du travail des opérateurs est en outre réduite.

Dans certains modes de réalisation, les organes d'emboitage élastique sont irréversibles. Par « irréversible », on entend qu'il n'est pas possible de désassembler les deux pièces en condition normale d'utilisation, sans outil spécifique notamment, et sans endommager au moins l'une des pièces. On assure ainsi un assemblage robuste du palier, la contreplaque ne risquant pas de se détacher de manière inopinée.

Dans certains modes de réalisation, les organes d'emboitage élastique comprennent au moins une languette élastique et un épaulement correspondant, la languette élastique étant configurée pour s'engager et être retenue derrière l'épaulement correspondant. Une telle configuration est particulièrement facile à fabriquer et à utiliser lors de l'assemblage du palier.

Dans certains modes de réalisation, au moins une languette élastique des organes d'emboitage élastique s'étend depuis une portion de retenue de la bride.

Dans certains modes de réalisation, au moins un épaulement des organes d'emboitage élastique est prévu dans une portion d'assemblage de la contreplaque. La contreplaque est ainsi plus compacte ; en particulier, selon l'invention, la contreplaque peut avoir une forme de plaque avec des surfaces planes, sans qu'aucun élément ne fasse saillie.

Dans certains modes de réalisation, les organes d'emboitage élastique sont configurés pour autoriser un jeu entre la contreplaque et la bride. Par exemple, chaque languette élastique possède une longueur plus importante que la distance séparant sa base de l'épaulement correspondant. Lorsqu'une couche élastomère est présente dans la gorge de la bride, ceci permet de régler la compression de cette couche élastomère et, ainsi, de régler l'adhésion entre le palier et la barre stabilisatrice.

Dans certains modes de réalisation, la contreplaque est libre de bouger au sein de ce jeu. Ceci permet de limiter l'effort sur la contre-plaque lors du transport avant montage sur le véhciule tout en laissant la possibiliter de réduire ou d'annuler ce jeu, et donc d'augmenter la compression de la couche élastomère, au moment de l'assablage sur le véhicule en vissant l'ensemble sur la caisse du véhicule.

Dans certains modes de réalisation, ce jeu est compris entre 1 et 3 mm. Typiquement, cela permet d'obtenir une compression de la couche élastomère de 30 à 80%, la couche élastomère étant considérée comme comprimé à 100% lorsque la contreplaque est en appui contre la bride, c'est-à-dire lorsqu'aucun jeu ne sépare la contreplaque de la bride.

Dans certains modes de réalisation, la bride et la contreplaque possèdent des organes de positionnement configurés pour positionner la contreplaque par rapport à la bride. Ces organes de positionnement sont distincts des organes d'emboitage élastique. Ils permettent de faciliter le positionnement de la contreplaque par rapport à la bride et de guider la contreplaque lors de son assemblage sur la bride : cet assemblage est ainsi facilité et plus rapide.

Dans certains modes de réalisation, les organes de positionnement comprennent au moins une projection et une découpe correspondante, la projection étant configurée pour s'engager dans la découpe correspondante.

Dans certains modes de réalisation, au moins une projection des organes de positionnement s'étend depuis une portion de retenue de la bride.

Dans certains modes de réalisation, au moins une découpe des organes de positionnement est prévue dans une portion d'assemblage de la contreplaque. La contreplaque est ainsi plus compacte ; en particulier, selon l'invention, la contreplaque peut avoir une forme de plaque avec des surfaces planes, sans qu'aucun élément ne fasse saillie.

Dans certains modes de réalisation, au moins une portion de retenue de la bride est munie d'un alésage de fixation. Ceci permet le passage d'une vis ou d'un rivet par exemple en vue de la fixation du palier sur le châssis du véhicule.

Dans certains modes de réalisation, la bride comprend deux pattes de retenue, formant portions de retenue, encadrant la gorge, et munies chacune d'un alésage de fixation.

Dans certains modes de réalisation, chaque patte de retenue comprend au moins un organe d'emboîtage élastique, et de préférence deux organes d'emboitage élastique. Ces organes d'emboitage élastique sont de préférence des languette élastiques.

Dans certains modes de réalisation, la contreplaque comprend une portion d'assemblage munie d'un alésage coïncident avec l'alésage de fixation d'une portion de retenue de la bride.

Dans certains modes de réalisation, la contreplaque comprend deux portions d'assemblage encadrant la portion d'obturation et munies chacune d'un alésage coïncident avec l'alésage de fixation de la patte de retenue correspondante de la bride.

Dans certains modes de réalisation, chaque portion d'assemblage comprend au moins un organe d'emboitage élastique, et de préférence deux organes d'emboitage élastique. Ces organes d'emboitage élastique sont de préférence des épaulements.

Dans certains modes de réalisation, l'alésage de fixation d'au moins une portion de retenue de la bride est muni d'une douille. Ceci permet de renforcer la zone de l'alésage afin que la fixation du palier sur le châssis du véhicule ne s'affaiblisse pas. Cette douille est de préférence métallique.

Dans certains modes de réalisation, la douille de l'une au moins des portions de retenue de la bride fait saillie depuis la surface de la portion de retenue de manière à s'engager dans l'alésage de la portion d'assemblage correspondant de la contreplaque. Une telle douille constitue ainsi un organe de positionnement.

Dans certains modes de réalisation, la bride et/ou la contreplaque est réalisée en matériau plastique, en aluminium ou en alliage d'aluminium.

Grâce à l'utilisation de tels matériaux, particulièrement légers, il est possible de réduire drastiquement la masse du palier par rapport au cas d'un palier conventionnel tout en gardant des propriétés mécaniques équivalentes. Il est ainsi possible d'obtenir un gain en masse d'au moins 40% par rapport à un palier métallique en fer ou alliage de fer par exemple. Une telle réduction de masse permet d'une part un travail moins pénible pour les opérateurs et des performances accrues pour le véhicule.

Dans certains modes de réalisation, la bride est réalisée en matériau thermoplastique, de préférence à base de polyamide, par exemple à base de PA66. Ce matériau, léger, confère de bonnes propriétés mécaniques. Il offre également une bonne adhérence avec le revêtement élastomère. La bride peut également être réalisée à base de polytéréphtalate de butylène (PBT), notamment.

Dans le présent exposé, on entend qu'une pièce donnée est réalisée « à base » d'un matériau particulier lorsqu'elle est composée à au moins 50%, de préférence au moins 80%, de préférence encore au moins 99%, du matériau considéré.

De même, dans certains modes de réalisation, la contreplaque est réalisée en matériau thermoplastique, de préférence à base de polyamide, par exemple à base de PA66. La contreplaque peut également être réalisée à base de polytéréphtalate de butylène (PBT), notamment

Dans certains modes de réalisation, la bride est réalisée dans un matériau renforcé de fibres. Ces fibres permettent de renforcer la tenue mécanique de la bride.

De même, dans certains modes de réalisation, la contreplaque est réalisée dans un matériau renforcé de fibres.

Dans certains modes de réalisation, les fibres sont des fibres de verre.

Dans certains modes de réalisation, les fibres sont des fibres courtes de longueur inférieure à 5 mm, de préférence comprise entre 2,5 et 3,5 mm.

Dans certains modes de réalisation, le diamètre des fibres est compris entre 0,1 et 0,5 mm, de préférence compris entre 0,2 et 0,3 mm.

Dans certains modes de réalisation, les fibres sont ensimées.

Dans certains modes de réalisation, la gorge de la bride possède une forme en U avec des parois latérales planes s'étendant depuis une portion de berceau hémicylindrique. Cette configuration permet une mise en place aisée de la barre stabilisatrice et une bonne transmission des efforts s'exerçant sur la barre.

Dans certains modes de réalisation, le palier comprend une couche élastomère prévue au sein de la gorge de la bride et destinée à entourer la barre stabilisatrice.

Dans le présent exposé, on entend par « couche élastomère » une couche composée à au moins 50%, de préférence au moins 80%, de préférence encore au moins 99%, d'un ou plusieurs élastomères.

Dans certains modes de réalisation, la couche élastomère est réalisée à base de caoutchouc, de préférence vulcanisé.

Dans certains modes de réalisation, la couche élastomère est réalisée en matériau thermoplastique, de préférence à base de polyuréthane (PU). Ce polymère comprend une succession de séquences rigides et de séquences souples, les séquences rigides jouant le rôle de points fixes ou de points de réticulation physique au sein de la matrice composée des séquences souples, ce qui permet d'obtenir des propriétés physiques et chimiques analogues au caoutchouc naturel ou synthétique vulcanisé chimiquement : ce matériau offre ainsi une hyperélasticité équivalente à celle du caoutchouc. Ce matériau offre par ailleurs une bonne résistance à l'abrasion ainsi qu'à la corrosion et une tenue en température plus élevée que celle du caoutchouc. De plus, contrairement au caoutchouc vulcanisé, les élastomères thermoplastiques, non vulcanisés chimiquement, peuvent être facilement recyclés. La couche élastomère peut également être réalisée à base de polyester ou d'une combinaison polyester thermoplastique-polyuréthane, polyéther thermoplastique-polyuréthane ou élastomère thermoplastique-polyester, pour ne citer que ces exemples.

Dans certains modes de réalisation, la couche élastomère comprend un insert. Cet insert, plastique ou métallique, permet d'ajuster la raideur de la couche élastomère.

Dans certains modes de réalisation, la couche élastomère occupe tout le volume de la gorge laissé par la barre stabilisatrice. Ceci facilite d'une part la fabrication de la couche élastomère et permet d'autre part une meilleure compression de la barre stabilisatrice.

Dans certains modes de réalisation, la couche élastomère est collée au sein de la gorge de la bride.

Dans certains modes de réalisation, la couche élastomère est injectée dans la gorge de la bride et réticulée en place de manière à solidariser la couche élastomère dans la gorge de la bride.

Dans certains modes de réalisation, la bride et/ou la contreplaque possède une structure alvéolaire. Une telle structure alvéolaire permet de réduire la quantité de matière utilisée et ainsi réduire encore la masse du palier.

Dans certains modes de réalisation, les alvéoles de la bride sont parallèles et s'étendent selon une direction principale de la bride orthogonale à la direction d'extension de la barre stabilisatrice. De cette manière, les parois latérales des alvéoles s'étendent dans la direction principale de la bride, c'est-à-dire la direction de fixation du palier et de compression de la barre stabilisatrice : on obtient ainsi une meilleure répartition des contraintes.

Dans certains modes de réalisation, au moins certaines parois séparant les alvéoles de la bride s'étendent dans des plans sensiblement radiaux et/ou tangentiels par rapport à l'axe principal de la bride. Cette orientation permet d'assurer une bonne tenue mécanique de la bride vis-à-vis des efforts de compression.

Dans certains modes de réalisation, au moins certaines parois séparant les alvéoles de la bride s'étendent dans des plans sensiblement radiaux et/ou tangentiels par rapport à l'axe d'un alésage de fixation de la bride. Cette orientation permet d'assurer une bonne tenue mécanique de la bride au niveau de cet alésage de fixation, en particulier vis-à-vis des efforts de fixation.

Dans certains modes de réalisation, chaque paroi séparant deux alvéoles de la bride s'étend dans un plan sensiblement radial ou un plan sensiblement tangentiel par rapport à l'axe principal de la bride ou à l'axe d'un alésage de fixation de la bride.

Dans le cas d'un matériau renforcé de fibres, il convient également de noter que ces alvéoles permettent d'orienter les fibres le long des parois séparant les alvéoles et donc de renforcer la bride dans ces mêmes plans structuraux.

Dans certains modes de réalisation, des congés sont prévus entre chaque paroi latérale des alvéoles de la bride. Ces congés facilitent l'écoulement du fluide dans le moule au cours de l'injection. Dans le cas d'un matériau renforcé de fibres, ils favorisent également le passage des fibres et leur orientation le long des parois.

De même, dans certains modes de réalisation, la contreplaque possède une structure alvéolaire.

Dans certains modes de réalisation, les alvéoles de la contreplaque sont parallèles et s'étendent selon une direction principale de la contreplaque orthogonale à la direction d'extension de la barre stabilisatrice. De cette manière, les parois latérales des alvéoles s'étendent dans la direction principale de la contreplaque, c'est-à-dire la direction d'insertion de la contreplaque dans la bride et de compression de la barre stabilisatrice : on obtient ainsi une meilleure répartition des contraintes.

Dans certains modes de réalisation, au moins certaines parois, et de préférence toutes les parois, séparant les alvéoles de la contreplaque s'étendent dans des plans sensiblement radiaux et/ou tangentiels par rapport à l'axe principal de la contreplaque.

Dans certains modes de réalisation, des congés sont prévus entre chaque paroi latérale des alvéoles de la contreplaque.

Dans certains modes de réalisation, le palier comprend en outre une cale, engagée au moins partiellement dans la gorge de la bride, comportant une portion de berceau. Cette cale peut notamment correspondre en tout ou partie aux différents modes de réalisations de la cale décrite dans la demande de brevet français n° FR1757406. Toutefois, une telle cale n'est en rien nécessaire et sera de préférence omise.

De manière générale, il convient de noter que l'enseignement du présent exposé est compatible avec celui des demandes de brevet français n° FR1757406 et FR1757412 : en particulier, les brides décrites dans ces demandes de brevet peuvent être adaptées selon les enseignements du présent exposé pour pouvoir leur rapporter une contreplaque selon l'un quelconque des modes de réalisation précédents.

Le présent exposé concerne également un ensemble stabilisateur pour véhicule, comprenant une barre stabilisatrice, et au moins un palier selon l'un quelconque des modes de réalisation précédents, monté sur la barre stabilisatrice.

Dans certains modes de réalisation, la barre stabilisatrice est une barre pleine ou un tube creux.

Dans certains modes de réalisation, la barre stabilisatrice est peinte.

Dans d'autres modes de réalisation, la barre stabilisatrice est dépourvue de peinture.

Dans certains modes de réalisation, la tension superficielle de la barre stabilisatrice au niveau du palier est supérieure à 60 mN/m, de préférence supérieure à 70 mN/m.

Les caractéristiques et avantages précités, ainsi que d'autres, apparaîtront à la lecture de la description détaillée qui suit, d'exemples de réalisation du palier proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue en perspective d'un ensemble stabilisateur.
La FIG 2 est une vue en perspective d'un exemple de palier.
La FIG 3 est une vue éclatée du palier de la FIG 2
La FIG 4A est une vue en coupe axiale du palier de la FIG 2 passant par les languettes élastiques.
La FIG 4B est une vue en coupe axiale du palier de la FIG 2 passant par les alésages de fixation.
La FIG 5 est une vue de dessus de la bride de la FIG 2.
La FIG 6 est une vue de dessous de la bride de la FIG 2.
La FIG 7 est une vue de dessus de la contreplaque de la FIG 2.
La FIG 8 est une vue de dessous de la contreplaque de la FIG 2.

### DESCRIPTION DETAILLEE D'EXEMPLE(S) DE REALISATION

Afin de rendre plus concrète l'invention, un exemple de palier est décrit en détail ci-après, en référence aux dessins annexés. Il est rappelé que l'invention ne se limite pas à cet exemple.

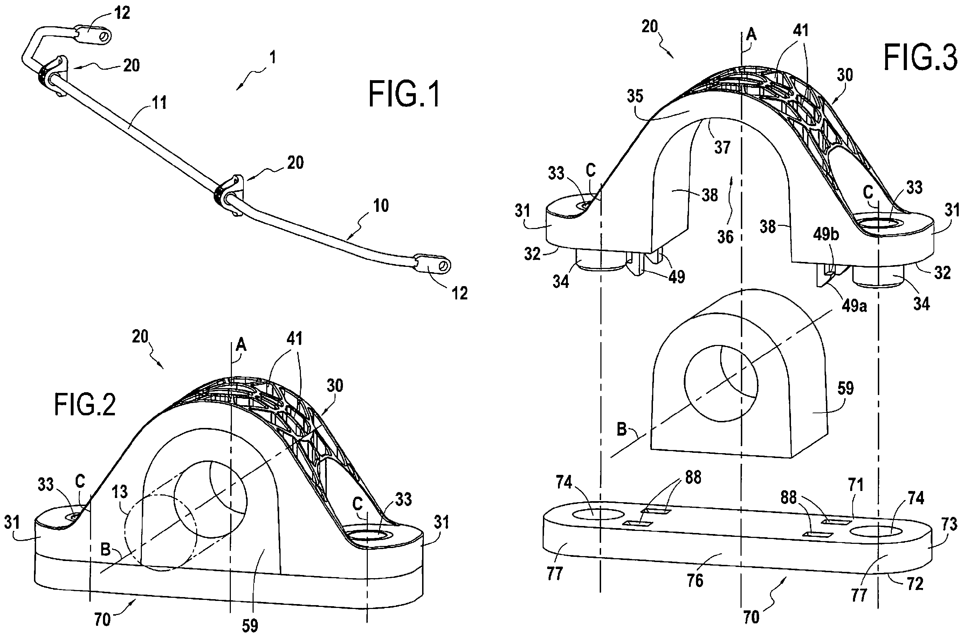

La FIG 1 représente un ensemble stabilisateur 1 pour véhicule comprenant une barre stabilisatrice 10, pleine ou creuse, peinte ou non, dont la partie centrale 11 est équipée de deux paliers 20. Les paliers 20 sont destinés à être fixés sur le châssis du véhicule tandis que les extrémités 12 de la barre stabilisatrice 10 sont destinées à être fixées sur des parties du véhicule solidaires de chaque roue d'un même essieu, en particulier le triangle de suspension de chaque roue de l'essieu.

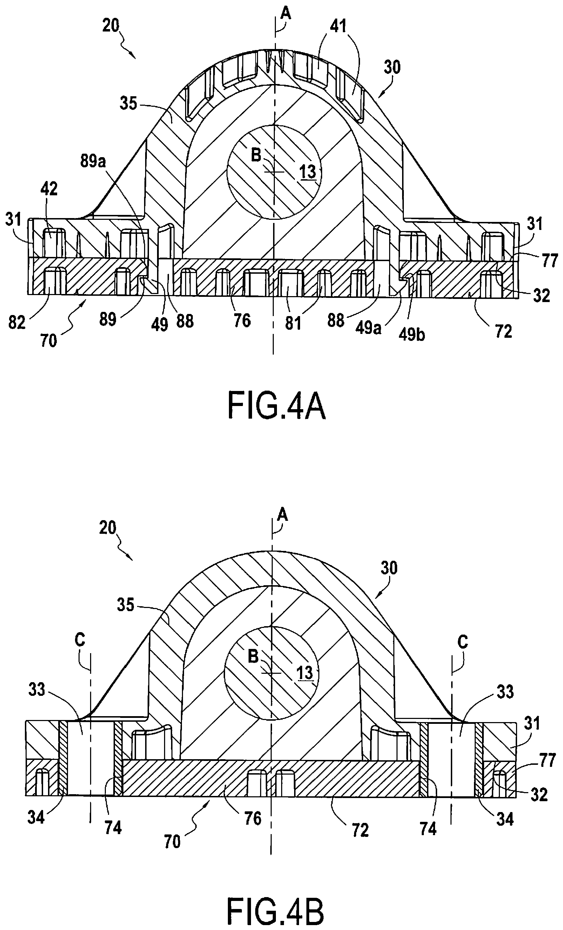

Les FIG 2 à 6 représentent un tel palier 20 monté sur un tronçon 13 de la barre stabilisatrice 10. Le palier 20 comprend une bride 30, une contreplaque 70 et une couche élastomère 59.

La bride 30 possède une forme générale de U et comprend deux pattes de retenue 31 reliées par un arceau 35 de manière à former une gorge 36. La bride 30 est symétrique par rapport à son axe principal A qui constitue plus largement l'axe principal du palier 20.

Chaque patte de retenue 31 s'étend latéralement depuis la base de l'arceau 35, perpendiculairement à l'axe principal A. Chaque patte de retenue 31 possède une surface d'appui 32, formant la surface d'appui de la bride 30, et un alésage traversant 33, d'axe C perpendiculaire à la surface d'appui 32 et donc parallèle à l'axe principal A. Chaque alésage 33 est muni d'une douille métallique 34 traversant la patte de retenue 31 et dépassant sur la surface d'appui 32 de la bride 30 sur une longueur sensiblement également à l'épaisseur de la contreplaque 70.

Chaque patte de retenue 31 comprend également deux languettes élastiques 49 s'étendant perpendiculairement depuis la surface d'appui 32. L'extrémité des languettes élastiques 49 prend la forme d'un crochet avec une surface d'insertion 49a inclinée et dirigée vers l'avant et une surface de blocage 49b disposée à angle droit et dirigée vers l'arrière.

La gorge 36, en forme générale de U, est également symétrique par rapport à l'axe principal A. Elle possède une portion de fond hémicylindrique, formant portion de berceau 37, flanquée de deux parois latérales planes 38 débouchant sur la surface d'appui 32 de la bride 30. La portion de berceau 37 hémicylindrique est dirigée selon un axe B orthogonal à l'axe A et correspondant à la direction d'extension de la barre stabilisatrice 10 lorsque le palier 20 est monté.

La bride 30 est réalisée par moulage et injection en polyamide 66 renforcé de fibres de verre. Ces fibres de verre sont des fibres courtes, dont la longueur est comprise entre 3 et 3,2 mm pour un diamètre compris entre 0,2 et 0,25 mm. Ces fibres sont traitées par ensimage pour permettre un bon mouillage des fibres puis mélangées à la matrice polyamide à hauteur de 30 à 50% en masse du matériau final. Les douilles métalliques 34 sont pour leur part insérées dans le moule de la bride 30 avant l'injection du matériau thermoplastique. Dans certains exemples, les douilles 34 peuvent comprendre des reliefs annulaires permettant de bloquer leurs positions au sein de la bride 30 une fois le matériau solidifié.

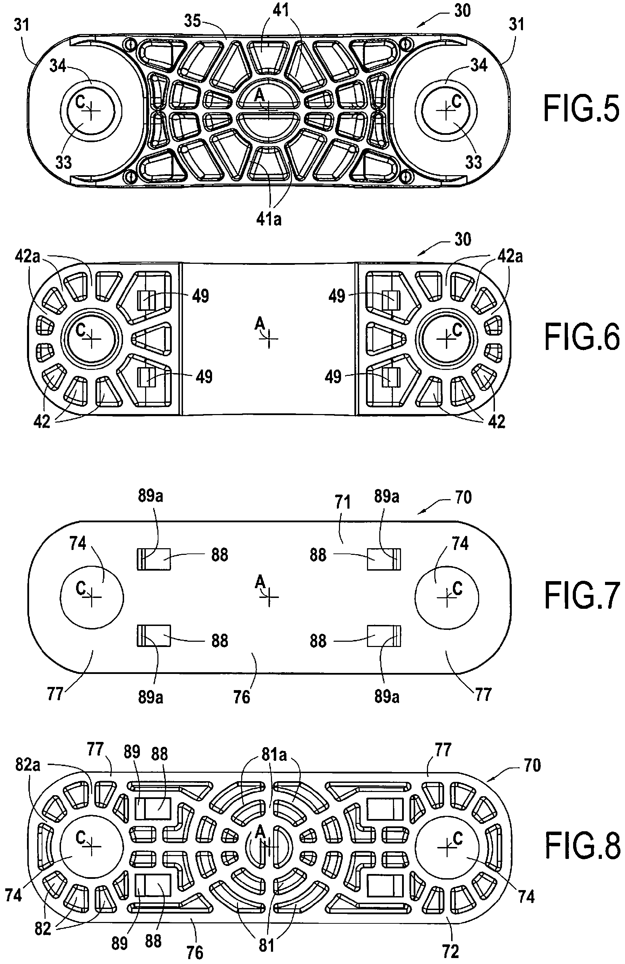

Comme cela est mieux visible sur les FIG 5 et 6, la bride 30 comporte de nombreuses alvéoles cylindriques 41, 42 s'étendant parallèlement à l'axe principal A de la bride 30. L'arceau 35 comporte un premier ensemble d'alvéoles 41 organisées de manière symétrique par rapport à l'axe principal A. En particulier, les parois 41a séparant ces alvéoles 41 s'étendent soit radialement par rapport à l'axe principal A, soit le long de courbes centrées sur l'axe principal A et de préférence sensiblement circonférentielles par rapport à l'axe principal A. Ces alvéoles 41 sont ouvertes sur la surface extérieure de l'arceau 35 et fermées au niveau de la gorge 36. En outre, les coins de ces alvéoles 41 sont arrondis, un congé étant prévu entre chaque paroi latérale des alvéoles 41, de manière à faciliter le passage et l'orientation des fibres de renfort dans la bride 30 au cours de l'injection.

Chaque patte de retenue 31 comporte également un deuxième ensemble d'alvéoles 42 organisées de manière symétrique par rapport à l'axe C de l'alésage 33 de la patte de retenue 31 considérée. En particulier, les parois 42a séparant ces alvéoles 42 s'étendent radialement par rapport à l'axe C de l'alésage 33. Ces alvéoles 42 sont ouvertes sur la surface d'appui 32 de la patte de retenue 31 et fermée au niveau de sa surface opposée. Ici également, les coins de ces alvéoles 42 sont arrondis, un congé étant prévu entre chaque paroi latérale des alvéoles 42.

La contreplaque 70 possède pour sa part une forme générale de plaque avec une face supérieure plane 71 et une face inférieure plane 72 reliées par une paroi latérale périphérique 73. La contreplaque 70 est également symétrique par rapport à l'axe principal A du palier 20. Plus précisément, les dimensions de la contreplaque 70 correspondent aux dimensions extérieures de la bride 30 de telle sorte que la contreplaque 70 peut se rapporter sur la surface d'appui 32 de la bride 30 en prolongeant exactement les contours de la bride 30.

Dans le présent exemple, la contreplaque 70 est essentiellement plane ; toutefois, dans d'autres exemples, elle pourrait avoir d'autres formes, par exemple une forme de berceau en fonction de la forme de la bride et/ou du châssis du véhicule.

Plus particulièrement, la contreplaque possède une portion d'obturation 76 encadrée par deux portions d'assemblages 77 : chaque portion d'assemblage 77 est prévue pour coïncider avec une patte de retenue 31 de la bride 30 tandis que la portion d'obturation 76 est prévu pour enjamber la gorge 36 de la bride 30 et ainsi la fermer.

Chaque portion d'assemblage 77 comporte un alésage 74 coïncident avec l'alésage de fixation 33 de la patte de retenue 31 correspondant de la bride 30 : son diamètre correspond sensiblement, c'est-à-dire à un jeu près, au diamètre externe de la douille 34 de telle sorte que la partie de la douille 34 faisant saillie sur la surface d'appui 32 de la bride 30 peut s'engager dans cet alésage 74.

De plus, chaque portion d'assemblage 77 comporte deux lumières 88 munies intérieurement, à proximité de la face supérieure 72 de la contreplaque 70, d'un épaulement 89 dirigé vers la face inférieure 71 de la contreplaque 70. Par ailleurs, une surfaceinclinée 79a est prévue à l'entrée de chaque lumière 88, au dos de l'épaulement 89.

La contreplaque 70 est réalisée par moulage et injection en polyamide 66 renforcé de fibres de verre. Les fibres de verre utilisées pour renforcer le polyamide de la contreplaque 70 sont analogues à celles utilisées pour la bride 30.

Comme cela est mieux visible sur la FIG 8, la contreplaque 70 comporte de nombreuses alvéoles cylindriques 81, 82 s'étendant parallèlement à l'axe principal A de la contreplaque 70 et du palier 20.

La portion d'obturation 76 comporte un premier ensemble d'alvéoles 81 organisées de manière symétrique par rapport à l'axe principal A. En particulier, les parois 81a séparant ces alvéoles 81 s'étendent soit radialement par rapport à l'axe principal A, soit le long de courbes centrées sur l'axe principal A et de préférence sensiblement circonférentielles par rapport à l'axe principal A. Ces alvéoles 81 sont ouvertes sur la surface inférieure 72 de la contreplaque 70 et fermées au niveau de sa surface supérieure 71. En outre, les coins de ces alvéoles 81 sont arrondis, un congé étant prévu entre chaque paroi latérale des alvéoles 81, de manière à faciliter le passage et l'orientation des fibres de renfort dans la contreplaque 70 au cours de l'injection.

Chaque portion d'assemblage 77 comporte également un deuxième ensemble d'alvéoles 82 organisées de manière symétrique par rapport à l'axe C de l'alésage 74 de la portion d'assemblage 77 considérée. En particulier, les parois 82a séparant ces alvéoles 82 s'étendent radialement par rapport à l'axe C de l'alésage 74. Ici également, ces alvéoles 82 sont ouvertes sur la surface inférieure 72 de la contreplaque 70 et fermées au niveau de sa surface supérieure 71. En outre, les coins de ces alvéoles 82 sont également arrondis, un congé étant prévu entre chaque paroi latérale des alvéoles 82.

L'ensemble stabilisateur 1 est alors assemblé de la manière suivante. Une fois la bride 30 et la contreplaque 70 fabriquées par moulage et injection, la bride 30 est passée autour de la barre stabilisatrice 10. On note sur les FIG. 2 à 4 que le tronçon 13 de la barre stabilisatrice 10 est reçu tout entier dans la gorge 36 de la bride 10, c'est-à-dire que la gorge 36 entoure complètement la barre stabilisatrice 10.

La barre stabilisatrice 10 peut avoir subi un traitement de préparation. En particulier, la barre stabilisatrice 10 peut avoir subi une étape de flammage durant laquelle la ou les zones devant recevoir le palier 20 sont chauffées localement pendant environ 6 s à l'aide d'une flamme de chalumeau, par exemple un chalumeau à gaz, à propane, butane ou acétylène pour ne citer que ces exemples. Durant cette étape de flammage, la barre est tournée autour de son axe, par exemple à la main.

Cet ensemble est alors placé dans un moule de telle sorte que la barre stabilisatrice 10 s'étende au sein de la bride 30 selon l'axe B en laissant un jeu continu et constant entre la barre stabilisatrice 10 et la portion de berceau 37 de la bride 30.

Du caoutchouc est alors injecté dans le moule de manière à remplir l'espace de la gorge 36 laissé tout autour de la barre stabilisatrice 10, depuis la portion de berceau 37 de la bride 30 jusqu'à l'ouverture de la gorge 36, formant ainsi la couche élastomère 59. La couche élastomère 59 ainsi obtenue est ensuite vulcanisée de manière à solidariser la barre stabilisatrice 10 au sein de la bride 30

Ensuite, la contreplaque 70 est rapportée sur la surface d'appui 32 de la bride 30. A cette occasion, les parties saillantes des douilles 34 permettent de positionner et d'aligner correctement la contreplaque 70 en emmanchant les alésages 74 de la contreplaque autour des douilles 34 de la bride 30. En particulier, on note sur les FIG 2 à 3 que la contreplaque 70 ferme la gorge 36 de la bride 30 dans le plan de la surface d'appui 32, c'est-à-dire sans pénétrer dans la gorge 36.

Cet alignement étant réalisé, les languettes élastiques 49 de la bride 30 se retrouvent automatiquement face aux lumières 88 de la contreplaque 70, la surface d'insertion 79a des languettes élastiques 49 en vis-à-vis de la surface inclinée 89a de la lumière 88 considérée. Dès lors, une pression sur la contreplaque 70, à l'aide d'une presse par exemple, permet aux languettes élastique 49 de se déformer, les surfaces d'insertion 49a glissant sur les surfaces inclinées 79a, jusqu'à ce que la surface de blocage 49b de chaque languette 49 s'engage derrière l'épaulement 89 de chaque lumière 88, bloquant ainsi la contreplaque 70 contre la surface d'appui 32 de la bride 30, et assurant ainsi une compression de la couche élastomère 59. En conséquence, on note que la couche élastomère 59 est intégralement contenue dans la gorge 36 de la bride 30.

Toutefois, dans d'autres exemples, les languettes élastiques 49 pourraient être plus longues de 1 ou 2 mm de telle sorte qu'un jeu de 1 ou 2 mm puisse subsister entre la contreplaque 70 et la surface d'appui 32 de la bride, ne compressant ainsi que partiellement la couche élastomère 59, au moins jusqu'à ce que des vis ne soient engagées et serrées dans les alésages 33 et 74.

Le palier 20 est ainsi assemblé et la même opération peut être menée pour le deuxième palier 20. De manière alternative, les deux paliers peuvent être assemblés simultanément.

L'ensemble stabilisateur 1 ainsi assemblé peut alors être monté sur le châssis du véhicule en plaquant la surface inférieure 72 du palier 10 sur le châssis et en vissant le palier 20 sur le châssis à l'aide de deux vis passant par les alésages 33 et 74 des pattes de retenue 32 de la bride 30 et des portions d'assemblage 77 de la contreplaque 70.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Palier pour barre stabilisatrice de véhicule, comprenant
une bride (30) comportant au moins une portion de retenue (31), munie d'un alésage de fixation (33), et une gorge (36), configurée pour recevoir la barre stabilisatrice (10), et
une contreplaque (70) comportant au moins une portion d'obturation (76), la contreplaque (70) étant prévue pour être rapportée sur la bride (30) de manière à ce que la portion d'obturation (76) ferme la gorge (36) de la bride (30),
dans lequel la contreplaque (70) est rapportée sur une surface d'appui (32) de ladite au moins une portion de retenue (31),
dans lequel la bride (30) et la contreplaque (70) possèdent des organes d'emboitage élastique (49, 89) configurés pour solidariser la contreplaque (70) sur la bride (30), et
**caractérisé en ce que** la contreplaque a une forme de plaque avec des surfaces planes, sans qu'aucun élément ne fasse saillie.

2. Palier selon la revendication 1, dans lequel les organes d'emboitage élastique (49, 89) sont irréversibles.

3. Palier selon la revendication 1 ou 2, dans lequel les organes d'emboitage élastique comprennent au moins une languette élastique (49), s'étendant depuis une portion de retenue (31) de la bride (30), et un épaulement (89) correspondant, prévu dans une portion d'assemblage (77) de la contreplaque (70), la languette élastique (49) étant configurée pour s'engager et être retenue derrière l'épaulement (89) correspondant.

4. Palier selon l'une quelconque des revendications 1 à 3, dans lequel la bride (30) et la contreplaque (70) possèdent des organes de positionnement (64, 74) configurés pour positionner la contreplaque (70) par rapport à la bride (30).

5. Palier selon l'une quelconque des revendications 1 à 4, dans lequel au moins une portion de retenue (31) de la bride (30) est munie d'un alésage de fixation (33), et
dans lequel la contreplaque (70) comprend une portion d'assemblage (77) munie d'un alésage (74) coïncident avec l'alésage de fixation (33) d'une portion de retenue (31) de la bride (30).

6. Palier selon la revendication 5, dans lequel l'alésage de fixation (33) d'au moins une portion de retenue (31) de la bride (30) est muni d'une douille métallique (34), et
dans lequel la douille métallique (34) de l'une au moins des portions de retenue (31) de la bride (30) fait saillie depuis la surface (32) de la portion de retenue (31) de manière à s'engager dans l'alésage (74) de la portion d'assemblage (77) correspondant de la contreplaque (70).

7. Palier selon l'une quelconque des revendications 1 à 6, dans lequel la bride (30) et/ou la contreplaque (70) est réalisée en matériau plastique, en aluminium ou en alliage d'aluminium.

8. Palier selon l'une quelconque des revendications 1 à 7, comprenant une couche élastomère (59) prévue au sein de la gorge (36) de la bride (30) et destinée à entourer la barre stabilisatrice (10).

9. Palier selon l'une quelconque des revendications 1 à 8, dans lequel la bride (30) et/ou la contreplaque (70) possède une structure alvéolaire (41, 42, 81, 82).

10. Palier selon la revendication 9, dans lequel les alvéoles (81, 82) de la contreplaque (70) sont parallèles et s'étendent selon une direction principale (A) de la contreplaque (70) orthogonale à la direction d'extension (B) de la barre stabilisatrice (10), et
dans lequel au moins certaines parois (81a, 82a) séparant les alvéoles (81, 82) de la contreplaque (70) s'étendent dans des plans sensiblement radiaux et/ou tangentiels par rapport à l'axe principal (A) de la contreplaque (70).

11. Ensemble stabilisateur pour véhicule, comprenant
une barre stabilisatrice (10), et
au moins un palier (20) selon l'une quelconque des revendications précédentes, monté sur la barre stabilisatrice (10).

## Patentansprüche

1. Lager für eine Fahrzeugstabilisatorstange, umfassend
einen Flansch (30), der wenigstens einen Halteabschnitt (31), welcher mit einer Befestigungsbohrung (33) versehen ist, und eine Hohlkehle (36) umfasst, welche dazu ausgelegt ist, die Stabilisatorstange (10) aufzunehmen, und
eine Gegenplatte (70), die wenigstens einen Verschlussabschnitt (76) umfasst, wobei die Gegenplatte (70) dazu vorgesehen ist, an den Flansch (30) angefügt zu werden, so dass der Verschlussabschnitt (76) die Hohlkehle (36) des Flansches (30) verschließt,
wobei die Gegenplatte (70) an einer Auflagefläche (32) des wenigstens einen Halteabschnitts (31) angefügt ist, und
wobei der Flansch (30) und die Gegenplatte (70) Elemente zum elastischen Ineinanderfügen (49, 89) aufweisen, die dazu ausgelegt sind, die Gegenplatte (70) an dem Flansch (30) fest anzubringen, und
**dadurch gekennzeichnet, dass** die Gegenplatte eine Plattenform mit ebenen Oberflächen aufweist, ohne dass irgendein Element vorsteht.

2. Lager nach Anspruch 1, bei dem die Elemente zum elastischen Ineinanderfügen (49, 89) irreversibel sind.

3. Lager nach Anspruch 1 oder 2, bei dem die Elemente zum elastischen Ineinanderfügen wenigstens eine elastische Zunge (49), die sich von einem Halteabschnitt (31) des Flansches (30) aus erstreckt, und eine entsprechende Schulter (89), welche in einem Montageabschnitt (77) der Gegenplatte (70) vorgesehen ist, umfassen, wobei die elastische Zunge (49) dazu ausgelegt ist, die entsprechende Schulter (89) zu hintergreifen und hinter dieser gehalten zu werden.

4. Lager nach einem der Ansprüche 1 bis 3, bei dem der Flansch (30) und die Gegenplatte (70) Positionierungselemente (64, 74) aufweisen, die dazu ausgelegt sind, die Gegenplatte (70) relativ zu dem Flansch (30) zu positionieren.

5. Lager nach einem der Ansprüche 1 bis 4, bei dem wenigstens ein Halteabschnitt (31) des Flansches (30) mit einer Befestigungsbohrung (33) versehen ist, und
bei dem die Gegenplatte (70) einen Montageabschnitt (77) umfasst, der mit einer Bohrung (74) versehen ist, die mit der Befestigungsbohrung (33) eines Halteabschnitts (31) des Flansches (30) zusammenfällt.

6. Lager nach Anspruch 5, bei dem die Befestigungsbohrung (33) wenigstens eines Halteabschnitts (31) des Flansches (30) mit einer Metallhülse (34) versehen ist, und
bei dem die Metallhülse (34) von wenigstens einem der Halteabschnitte (31) des Flansches (30) von der Oberfläche (32) des Halteabschnitts (31) vorspringt, um in die entsprechende Bohrung (74) des Montageabschnitts (77) der Gegenplatte (70) einzugreifen.

7. Lager nach einem der Ansprüche 1 bis 6, bei dem der Flansch (30) und/oder die Gegenplatte (70) aus Kunststoffmaterial, aus Aluminium oder aus einer Aluminiumlegierung gefertigt ist.

8. Lager nach einem der Ansprüche 1 bis 7, umfassend eine Elastomerschicht (59), die innerhalb der Hohlkehle (36) des Flansches (30) vorgesehen und dazu bestimmt ist, die Stabilisatorstange (10) zu umgeben.

9. Lager nach einem der Ansprüche 1 bis 8, bei dem der Flansch (30) und/oder die Gegenplatte (70) eine Wabenstruktur (41, 42, 81, 82) aufweist/aufweisen.

10. Lager nach Anspruch 9, bei dem die Zellen (81, 82) der Gegenplatte (70) parallel sind und entlang einer Hauptrichtung (A) der Gegenplatte (30) orthogonal zur Erstreckungsrichtung (B) der Stabilisatorstange (10) verlaufen, und
wobei wenigstens bestimmte Wände (81a, 82a), die die Zellen (81, 82) von der Gegenplatte (70) trennen, sich in im Wesentlichen radialen und/oder tangentialen Ebenen in Bezug auf die Hauptachse (A) der Gegenplatte (70) erstrecken.

11. Stabilisatoranordnung für ein Fahrzeug, umfassend
eine Stabilisatorstange (10) und
wenigstens ein Lager (20) nach einem der vorhergehenden Ansprüche, das an der Stabilisatorstange (10) angebracht ist.

## Claims

1. A bearing for a stabilizer bar of a vehicle, comprising:
a flange (30) including at least one retaining portion (31), provided with a fastening bore (33), and one groove (36), configured to receive the stabilizer bar (10), and
a backplate (70) including at least one obturation portion (76), the backplate (70) being provided to be added onto the flange (30) so that the obturation portion (76) closes the groove (36) of the flange (30),
wherein the backplate (70) is added onto an abutment surface (32) of said at least one retaining portion (31), and
wherein the flange (30) and the backplate (70) have elastic nesting members (49, 89) configured to secure the backplate (70) on the flange (30),
**characterized in that** the backplate has a shape of a plate with planar surfaces, with no protrusion of elements.

2. The bearing according to claim 1, wherein the elastic nesting members (49, 89) are irreversible.

3. The bearing according to claim 1 or 2, wherein the elastic nesting members comprise at least one elastic tab (49), extending from a retaining portion (31) of the flange (30), and one corresponding shoulder (89), provided in an assembly portion (77) of the backplate (70), the elastic tab (49) being configured to be engaged and retained behind the corresponding shoulder (89).

4. The bearing according to any one of claims 1 to 3, wherein the flange (30) and the backplate (70) have positioning members (64, 74) configured to position the backplate (70) relative to the flange (30).

5. The bearing according to any one of claims 1 to 4, wherein at least one retaining portion (31) of the flange (30) is provided with a fastening bore (33), and
wherein the backplate (70) comprises an assembly portion (77) provided with a bore (74) coincident with the fastening bore (33) of a retaining portion (31) of the flange (30).

6. The bearing according to claim 5, wherein the fastening bore (33) of at least one retaining portion (31) of the flange (30) is provided with a metal sleeve (34), and
wherein the metal sleeve (34) of one at least of the retaining portions (31) of the flange (30) protrudes from the surface (32) of the retaining portion (31) so as to be engaged in the bore (74) of the corresponding assembly portion (77) of the backplate (70).

7. The bearing according to any one of claims 1 to 6, wherein the flange (30) and/or the backplate (70) is made of plastic material, aluminum or aluminum alloy.

8. The bearing according to any one of claims 1 to 7, comprising an elastomer layer (59) provided within the groove (36) of the flange (30) and intended to surround the stabilizer bar (10).

9. The bearing according to any one of claims 1 to 8, wherein the flange (30) and/or the backplate (70) has a honeycomb structure (41, 42, 81, 82).

10. The bearing according to claim 9, wherein the cells (81, 82) of the backplate (70) are parallel and extend along a main direction (A) of the backplate (70) orthogonal to the direction of extension (B) of the stabilizer bar (10), and
wherein at least some walls (81a, 82a) separating the cells (81, 82) of the backplate (70) extend in substantially radial and/or tangential planes with respect to the main axis (A) of the backplate (70).

11. A stabilizer unit for a vehicle, comprising:
a stabilizer bar (10), and
at least one bearing (20) according to any one of the preceding claims, mounted on the stabilizer bar (10).
